# EUROPEAN PATENT APPLICATION

(11) **EP 4 549 000 A1**
(43) Date of publication of application: **07.05.2025**
(21) Application number: 23831076.7
(22) Date of filing: 13.06.2023
(51) Int. Cl.: B01D 53/32, C01B 32/50

(54) **CARBON DIOXIDE RECOVERY SYSTEM**

(30) Priority: 29.06.2022 JP 2022104810
(71) Applicant: DENSO CORPORATION, Kariya-city, Aichi 448-8661 (JP)
(72) Inventor: UMEDA, Hiroaki, Kariya-city, Aichi 448-8661 (JP); TATSUMI, Hironori, Kariya-city, Aichi 448-8661 (JP); MORIOKA, Yoshiki, Kariya-city, Aichi 448-8661 (JP)
(74) Representative: TBK
(86) International application number: PCT/JP2023/021884
(87) International publication number: WO 2024/004628

(57) **Abstract**

A carbon dioxide recovery system is for separating CO₂ from a CO₂ containing gas that contains CO₂ through electrochemical reactions and includes an electrochemical cell (101) in which a working electrode (102) including a CO₂ adsorbent (102b) and a counter electrode (103) are disposed to sandwich an electrolyte (106). The CO₂ adsorbent is configured to absorb CO₂ in response to electrons being supplied from the counter electrode to the working electrode due to a voltage applied between the working electrode and the counter electrode. The electrolyte is made of a material that satisfies at least one of requirements that a dissolved oxygen concentration is 0.2 cm³/cm³ or less and an oxygen diffusion coefficient is 5×10⁻⁷ cm⁻²/s or less.

## Description

### CROSS REFERENCE TO RELATED APPLICATION

This application is based on Japanese Patent Application No. 2022-104810 filed on June 29, 2022, the disclosure of which is incorporated herein by reference.

### TECHNICAL FIELD

The present disclosure relates to carbon dioxide recovery systems that recover CO₂ from CO₂ containing gas.

### BACKGROUND ART

Patent Literature 1 proposes a method for separating CO₂ from a CO₂ containing gas through electrochemical reactions. In a gas separation system of Patent Literature 1, a CO₂ adsorbent capable of adsorbing CO₂ is provided on a working electrode of an electrochemical cell. The CO₂ adsorbent is an electroactive species, and the adsorption and discharge of CO₂ by the CO₂ adsorbent can be switched by changing a potential difference between the working electrode and a counter electrode.

### PRIOR ART LITERATURES

### PATENT LITERATURE

Patent Literature 1: JP 2018-533470 A

### SUMMARY OF INVENTION

The present inventors have found that when a CO₂ adsorbent having no active sites is used in a working electrode of an electrochemical cell, the amount of CO₂ adsorption decreases for the following reasons.

That is, when a CO₂ adsorbent having no active sites is used, active oxygen O₂⁻ generated from O₂ contained in the CO₂ containing gas contributes to the adsorption of CO₂ at the working electrode. On the other hand, when the active oxygen generated at the working electrode diffuses to a counter electrode, a counter-electrode active material is oxidized and decomposed by the active oxygen, and the amount of electrons supplied from the counter electrode to the working electrode decreases. As a result, the amount of CO₂ adsorbed at the working electrode decreases.

In view of the above points, an object of the present disclosure is to provide a carbon dioxide recovery system capable of restricting a decrease in the amount of CO₂ adsorption in an electrochemical cell.

In order to achieve the above object, each of carbon dioxide recovery systems of the present disclosure includes an electrochemical cell in which a working electrode including a CO₂ adsorbent and a counter electrode are disposed to sandwich an electrolyte.

In a carbon dioxide recovery system according to a first aspect of the present disclosure, the CO₂ adsorbent is configured to absorb CO₂ in response to electrons being supplied from the counter electrode to the working electrode due to a voltage applied between the working electrode and the counter electrode. The electrolyte is made of a material that satisfies at least one of requirements that a dissolved oxygen concentration is 0.2 cm³/cm³ or less and an oxygen diffusion coefficient is 5×10⁻⁷ cm⁻²/s or less.

In a carbon dioxide recovery system according to a second aspect of the present disclosure, the CO₂ adsorbent is configured to absorb CO₂ in response to electrons being supplied from the counter electrode to the working electrode due to a voltage applied between the working electrode and the counter electrode. The counter electrode includes a counter-electrode active material, and the counter-electrode active material is added with an antioxidant that reacts more preferentially with active oxygen than the counter-electrode active material.

In a carbon dioxide recovery system according to a third aspect of the present disclosure, the counter electrode includes no active material. The CO₂ adsorbent is configured to adsorb CO₂ in response to electrons being supplied from the counter electrode to the working electrode due to a voltage applied between the working electrode and the counter electrode so that a potential difference obtained by subtracting a potential of the counter electrode from a potential of the working electrode is equal to or less than a predetermined value.

According to the carbon dioxide recovery systems of the present disclosure, a decrease in the amount of electrons supplied from the counter electrode to the working electrode can be restricted, and a decrease in the amount of CO₂ adsorption by the working electrode can be restricted.

### BRIEF DESCRIPTION OF DRAWINGS

FIG. 1 is a diagram illustrating a carbon dioxide recovery system of a first embodiment.
FIG. 2 is a diagram illustrating a CO₂ recovery device.
FIG. 3 is a cross-sectional view of an electrochemical cell of the first embodiment.
FIG. 4 is a diagram for explaining a CO₂ recovery mode and a CO₂ discharge mode of the CO₂ recovery device.
FIG. 5 is a graph showing a change in an electron supply amount in the electrochemical cell of the first embodiment.
FIG. 6 is a graph showing a change in a CO₂ adsorption amount in the electrochemical cell of the first embodiment.
FIG. 7 is a cross-sectional view of an electrochemical cell of a fourth embodiment.

### DESCRIPTION OF EMBODIMENTS

The following will describe embodiments for carrying out the present disclosure with reference to the drawings. In each embodiment, portions corresponding to the elements described in the preceding embodiments are denoted by the same reference numerals, and redundant explanation may be omitted. When only a part of a configuration is described in an embodiment, another preceding embodiment may be applied to the other parts of the configuration. The parts may be combined even if it is not explicitly described that the parts can be combined. The embodiments may be partially combined even if it is not explicitly described that the embodiments can be combined, provided there is no harm in the combination.

### (First Embodiment)

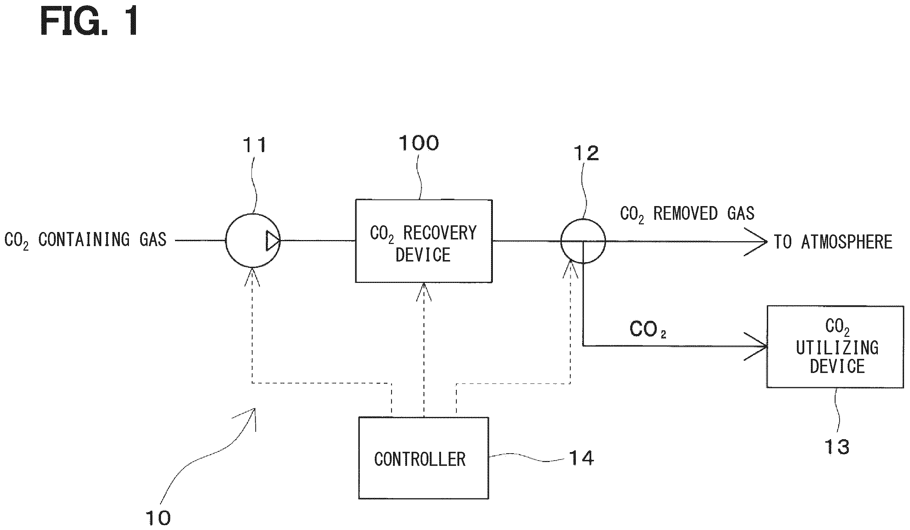

The following describes a first embodiment of the present disclosure with reference to the drawings. As shown in FIG. 1, a carbon dioxide recovery system 10 of the present embodiment includes a compressor 11, a CO₂ recovery device 100, a passage switching valve 12, a CO₂ utilizing device 13, and a controller 14.

The compressor 11 pumps CO₂ containing gas to the CO₂ recovery device 100. The CO₂ containing gas is a mixed gas that contains CO₂ and a gas other than CO₂, such as air. The CO₂ containing gas contains at least O₂ as the gas other than CO₂.

The CO₂ recovery device 100 is a device that separates CO₂ from the CO₂ containing gas and recovers CO₂. The CO₂ recovery device 100 discharges a CO₂ removed gas that is a gas after CO₂ is recovered from the CO₂ containing gas, or CO₂ recovered from the CO₂ containing gas. The configuration of the CO₂ recovery device 100 will be described in detail later.

The passage switching valve 12 is a three-way valve that switches a passage of exhaust gas from the CO₂ recovery device 100. The passage switching valve 12 switches the passage of the exhaust gas toward the atmosphere when the CO₂ removed gas is discharged from the CO₂ recovery device 100, and switches the passage of the exhaust gas toward the CO₂ utilizing device 13 when CO₂ is discharged from the CO₂ recovery device 100.

The CO₂ utilizing device 13 is a device that utilizes CO₂. The CO₂ utilizing device 13 may be a storage tank for storing CO₂ or a conversion device for converting CO₂ into fuel. As the conversion device, a device that converts CO₂ into a hydrocarbon fuel such as methane can be used. The hydrocarbon fuel may be gaseous fuel at normal temperature and pressure, or may be liquid fuel at normal temperature and pressure.

The controller 14 includes a well-known microcontroller including a central processing device (CPU), a read only memory (ROM), a random access memory (RAM) and the like, and peripheral circuits thereof. The controller 14 performs various calculations and processes based on control programs stored in the ROM, and controls actuations of various devices connected to an output side of the controller 14. The controller 14 of the present embodiment performs an operation control of the compressor 11, an operation control of the CO₂ recovery device 100, a passage switching control of the passage switching valve 12 and the like.

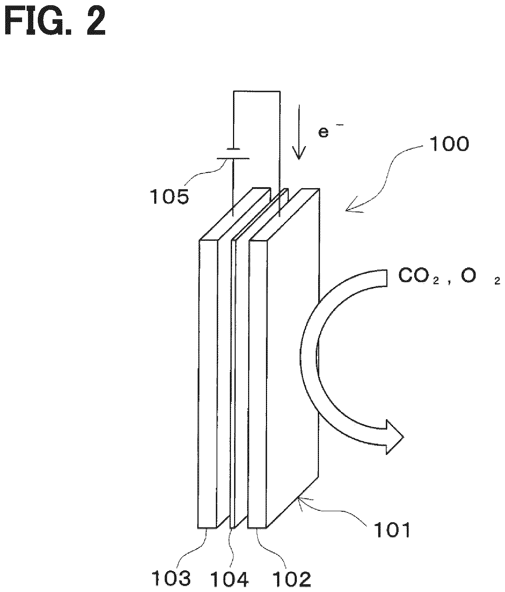

Next, the CO₂ recovery device 100 will be described with reference to FIG. 2. As shown in FIG. 2, the CO₂ recovery device 100 is provided with an electrochemical cell 101. The electrochemical cell 101 includes a working electrode 102, a counter electrode 103 and an insulating layer 104. In the example shown in FIG. 2, the working electrode 102, the counter electrode 103 and the insulating layer 104 are each formed in a plate shape. In FIG. 2, the working electrode 102, the counter electrode 103 and the insulating layer 104 are illustrated to have distances therebetween, but actually, these components are arranged to be in contact with each other.

The electrochemical cell 101 may be housed in a container (not shown). The container may define a gas inlet for introducing the CO₂ containing gas into the container and a gas outlet for discharging the CO₂ removed gas and CO₂ out of the container.

The CO₂ recovery device 100 is configured to adsorb and desorb CO₂ through electrochemical reactions, thereby separating and recovering CO₂ from the CO₂ containing gas. The CO₂ recovery device 100 includes a power supply 105 that applies a predetermined voltage to the working electrode 102 and the counter electrode 103, and can change a potential difference between the working electrode 102 and the counter electrode 103. The working electrode 102 is a negative electrode, and the counter electrode 103 is a positive electrode.

The electrochemical cell 101 can be switched between a CO₂ recovery mode in which CO₂ is recovered at the working electrode 102 and a CO₂ discharge mode in which CO₂ is discharged from the working electrode 102 by changing the potential difference between the working electrode 102 and the counter electrode 103. The CO₂ recovery mode is a charging mode for charging the electrochemical cell 101, and the CO₂ discharge mode is a discharging mode for discharging the electrochemical cell 101.

In the CO₂ recovery mode, a first voltage V1 is applied between the working electrode 102 and the counter electrode 103, and electrons flows from the counter electrode 103 to the working electrode 102. At the first voltage V1, the counter electrode potential is greater than the working electrode potential. When the first voltage V1 is a potential difference obtained by subtracting the potential of the counter electrode 103 from the potential of the working electrode 102, the first voltage V1 can be set within a range of -0.5 to -2.0 V, for example.

In the CO₂ discharge mode, a second voltage V2 is applied between the working electrode 102 and the counter electrode 103, and electrons flows from the working electrode 102 to the counter electrode 103. The second voltage V2 is a voltage lower than the first voltage V1, and a magnitude relationship between the working electrode potential and the counter electrode potential is not limited. That is, in the CO₂ discharge mode, the working electrode potential may be lower than, equal to, or greater than the counter electrode potential.

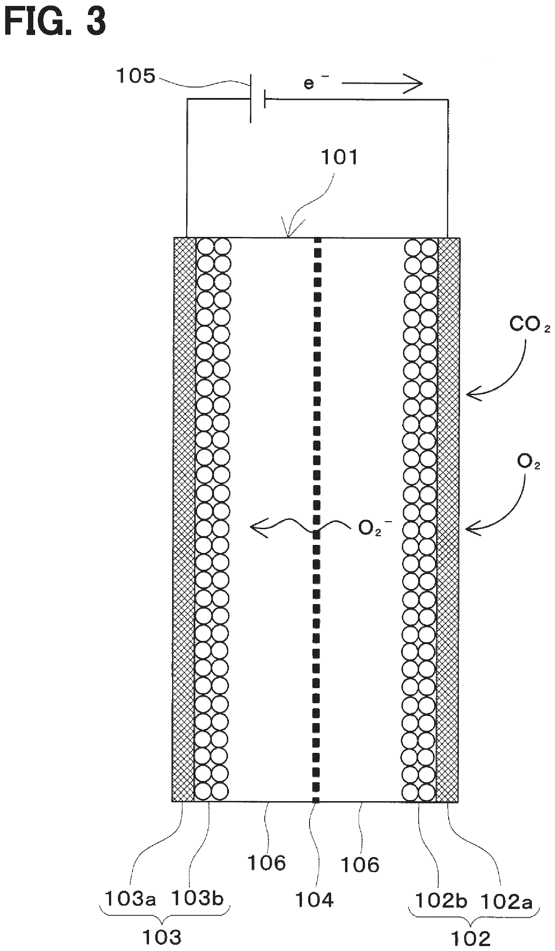

As shown in FIG. 3, the working electrode 102 is provided with a working-electrode current collector 102a and a CO₂ adsorbent 102b.

The working-electrode current collector 102a is a porous conductive material having pores through which gas containing CO₂ can pass. As the working-electrode current collector 102a, for example, a carbonaceous material or a metal porous body can be used. The carbonaceous material constituting the working-electrode current collector 102a may be, for example, carbon paper, carbon cloth, non-woven carbon mat, porous gas diffusion layer (GDL) and the like. The metal porous body constituting the working-electrode current collector 102a may be, for example, a metal mesh that is a metal (e.g., Al, Ni, etc.) formed into a mesh shape.

The CO₂ adsorbent 102b adsorbs CO₂ by receiving electrons, and desorbs the adsorbed CO₂ by releasing electrons. The CO₂ adsorbent 102b is made of a material whose chemical skeleton does not change when adsorbing CO₂.

In the present embodiment, the CO₂ adsorbent 102b is a made of material that can transfer electrons without changing its chemical skeleton when a negative potential is applied to the counter electrode 103. The CO₂ adsorbent 102b is made of a material in which, when receiving electrons from the counter electrode 103, the electric charge is delocalized in the entire material without concentrating on a specific element in its chemical structure. In other words, the CO₂ adsorbent 102b does not have a chemical structure that serves as an active site for adsorbing CO₂ in the material itself.

When the first voltage V1 is applied between the working electrode 102 and the counter electrode 103, electrons flow from the counter electrode 103 to the working electrode 102, and the CO₂ adsorbent 102b takes in the electrons and adsorbs CO₂. When the second voltage V2 is applied between the working electrode 102 and the counter electrode 103, electrons flow from the working electrode 102 to the counter electrode 103, and the CO₂ adsorbent 102b discharges the electrons and desorbs CO₂.

The CO₂ adsorbent 102b of the present embodiment is a conductive material with a high specific surface area. As the material constituting the CO₂ adsorbent 102b and having high specific surface area, for example, a material that can be used as a carbon electrode, such as carbon black, graphene, carbon nanotubes, activated carbon, Ketjen Black, or mesoporous carbon, can be used.

In the CO₂ recovery mode, an oxygen reduction reaction shown in the following reaction formula (1) and a carbonate ion generation reaction shown in the following reaction formula (2) proceed at the working electrode 102, and CO₂ is adsorbed to the working electrode 102. In other words, the oxygen reduction reaction triggers the CO₂ adsorption at the working electrode 102.

O₂+2e⁻→O2⁻ (1)

O₂⁻ + CO₂ → 1/2O₂ + CO₃²⁻ (2)

At the working electrode 102, O₂ contained in the CO₂ containing gas receives electrons and is reduced, thereby causing an oxygen reduction reaction. Superoxide O₂⁻, which is a type of active oxygen is formed by the oxygen reduction reaction. The active oxygen O₂⁻ generated in the oxygen reduction reaction is highly reactive, and oxidizes CO₂ to generate carbonate ions CO₃²⁻, which are oxide ions of CO₂, in the carbonate ion generation reaction. At the working electrode, CO₂ is adsorbed onto the working electrode 102 in the form of carbonate ions including CO₃²⁻. That is, at the working electrode 102, active oxygen O₂⁻ generated by the oxygen reduction reaction contributes to the CO₂ adsorption.

The CO₂ adsorbent 102b is added with a binder. The binder is provided to hold the CO₂ adsorbent 102b on the working-electrode current collector 102a of the working electrode 102. The binder has an adhesive force and is provided between the CO₂ adsorbent 102b and the working-electrode current collector 102a.

The binder may be a conductive resin. An epoxy resin containing Ag or the like as a conductive filler, a fluororesin such as polytetrafluoroethylene (PTFE) or polyvinylidene fluoride (PVDF), or the like can be used as the conductive resin.

The binder can be brought into contact with the working-electrode current collector 102a including the CO₂ adsorbent 102b by using an organic solvent similarly to a conductive substance. Alternatively, a raw material of the binder and the CO₂ adsorbent 102b may be dispersed and mixed using a homogenizer or the like, and then the mixture may be pressure-bonded to the working-electrode current collector 102a or spray-coated on the working-electrode current collector 102a.

As shown in FIG. 3, the counter electrode 103 has a structure similar to the working electrode 102, and includes a counter-electrode current collector 103a and a counter-electrode active material 103b.

The counter-electrode current collector 103a may use the same conductive material as the working-electrode current collector 102a, or may use a different material.

The counter-electrode active material 103b is an auxiliary electroactive species that exchanges electrons with the CO₂ adsorbent 102b through a redox reaction. The counter-electrode active material 103b may be, for example, a metal complex that can receive and release electrons by changing a valence of a metal ion. Examples of such metal complex include cyclopentadienyl metal complexes such as ferrocene, nickelocene and cobaltocene, and porphyrin metal complexes. In the present embodiment, polyvinyl ferrocene shown below is used as the counter-electrode active material 103b. 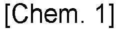 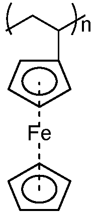 A conductive material and a binder are added to the counter-electrode active material 103b. The conductive material forms a conductive path to the counter-electrode active material 103b. The binder may be any material as long as it can hold the counter-electrode active material 103b on the counter-electrode current collector 103a and has conductivity. The conductive material of the counter electrode 103 may be, for example, a carbon material such as carbon nanotube, carbon black, or graphene. The binder of the counter electrode 103 may use the same material as the working electrode 102, or may use a different material.

The insulating layer 104 is arranged between the working electrode 102 and the counter electrode 103, and is a separator that separates the working electrode 102 and the counter electrode 103 from each other. The insulating layer 104 prevents physical contact between the working electrode 102 and the counter electrode 103 and electrically insulates the working electrode 102 and the counter electrode 103 from each other.

The insulating layer 104 has ion permeability. In the present embodiment, a porous body is used as the insulating layer 104. The insulating layer 104 may be, a cellulose membrane, a polymer, a composite material of a polymer and a ceramic, or the like.

In the electrochemical cell 101, the working electrode 102 and the counter electrode 103 are disposed so as to sandwich an electrolyte 106. The electrolyte 106 is an ion conductive material provided between the working electrode 102 and the counter electrode 103. The electrolyte 106 is partitioned into a portion close to the working electrode 102 and a portion close to the counter electrode 103 by the insulating layer 104.

The electrolyte 106 is in contact with the CO₂ adsorbent 102b. The ions contained in the electrolyte 106 promote electron attraction of the CO₂ adsorbent 102b when the CO₂ adsorbent 102b adsorbs CO₂.

As the electrolyte 106, for example, an ionic liquid can be used. The ionic liquid is a salt of a liquid having non-volatility under normal temperature and pressure. When the ionic liquid is used as the electrolyte 106, the ionic liquid may be gelled to prevent elution of the ionic liquid from the electrochemical cell 101.

In the CO₂ recovery mode, when O₂ contained in the CO₂ containing gas dissolves in the electrolyte 106 and comes into contact with the CO₂ adsorbent 102b, active oxygen O₂⁻ is generated from O₂, and the active oxygen generated at the working electrode 102 diffuses to the counter electrode 103. For this reason, in order to restrict O₂ from coming into contact with the CO₂ adsorbent 102b via the electrolyte 106 and to restrict the active oxygen from diffusing from the working electrode 102 to the counter electrode 103, it is desirable to use, as the electrolyte 106, a material that has a small dissolved oxygen concentration and a small oxygen diffusion coefficient. In the present embodiment, the electrolyte 106 is made of a material that satisfies at least one of requirements that the dissolved oxygen concentration is 0.2 cm³/cm³ or less and the oxygen diffusion coefficient is 5×10⁻⁷ cm⁻²/s or less.

On the other hand, in the CO₂ recovery mode, CO₂ contained in the CO₂ containing gas dissolves in the electrolyte 106 and comes into contact with the CO₂ adsorbent 102b, and the CO₂ adsorbent 102b bonds with the CO₂. Therefore, in order to promote contact of CO₂ with the CO₂ adsorbent 102b via the electrolyte 106, it is desirable to use, as the electrolyte 106, a material that has a large dissolved carbon dioxide concentration and has a large carbon dioxide diffusion coefficient. In the present embodiment, the electrolyte 106 is made of a material that has a dissolved carbon dioxide concentration of 1×10⁻³ cm³/cm³ or more and a carbon dioxide diffusion coefficient of 1×10⁻⁷ cm⁻²/s or more.

The oxygen diffusion coefficient and the carbon dioxide diffusion coefficient can be measured by NMR methods. The measurement of the diffusion coefficients by the NMR method uses a pulsed magnetic field gradient (PFG) device. Molecular diffusion is a phenomenon in which the position of a molecule changes due to translational motion. By applying a pulsed magnetic field gradient to each position, it is possible to imprint positional information onto a phase of a nuclear spin of atomic nuclei. Then, by analyzing a magnetic field gradient history before and after diffusion, the diffusion coefficients of the diffusing substances can be calculated.

The dissolved oxygen concentration and the dissolved carbon dioxide concentration can be measured by a volumetric method using a gas burette and a mercury manometer. In the volumetric method using a gas burette and a mercury manometer, the amount of gas dissolved in the electrolyte 106 can be measured by measuring the volume and pressure of the gas in the gas burette when the electrolyte 106 and the gas reach solution equilibrium.

As the electrolyte 106 that satisfies the above-described requirements of the dissolved oxygen concentration, the oxygen diffusion coefficient, the dissolved carbon dioxide concentration, and the carbon dioxide diffusion coefficient, at least one of ionic liquids [TMPA][TFSI] and [P14][TFSI] shown below can be used. 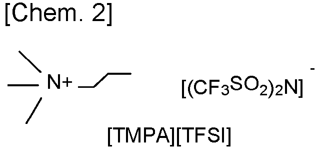 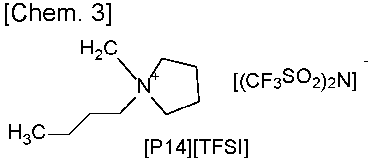 [TMPA][TFSI] and [P14][TFSI] may be used alone as the electrolyte 106 or a mixture of them may be used as the electrolyte 106. That is, the ionic liquid used as the electrolyte 106 contains at least one of [TMPA] and [P14] as a cation, and contains [TFSI] as an anion.

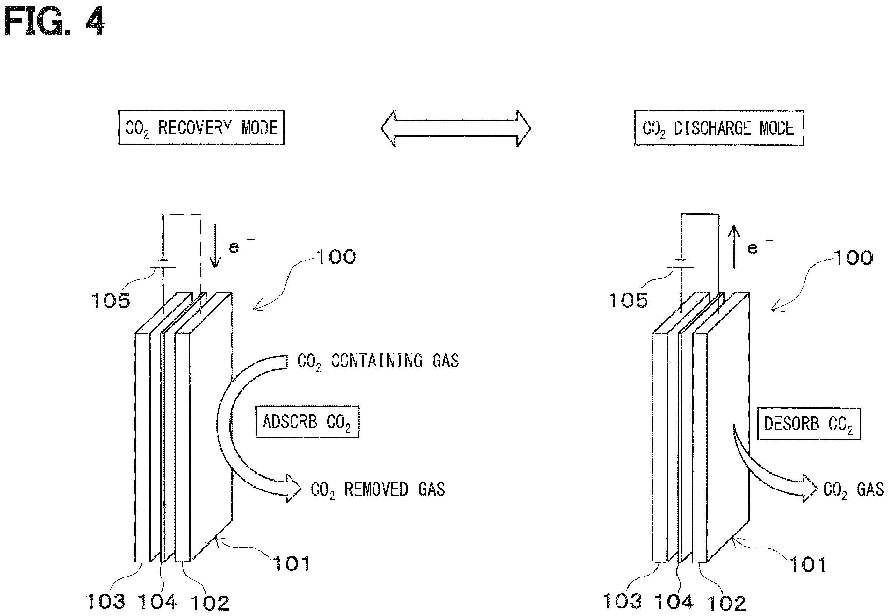

Next, an operation of the carbon dioxide recovery system 10 of the present embodiment will be described. The carbon dioxide recovery system 10 operates by alternately switching between the CO₂ recovery mode and the CO₂ discharge mode as shown in FIG. 4. The operation of the carbon dioxide recovery system 10 is controlled by the controller 14.

First, the CO₂ recovery mode will be described. In the CO₂ recovery mode, the compressor 11 operates to supply CO₂ containing gas to the CO₂ recovery device 100. In the CO₂ recovery device 100, the voltage applied between the working electrode 102 and the counter electrode 103 is set to the first voltage V1. As a result, electron donation of the counter-electrode active material 103b of the counter electrode 103 and electron attraction of the CO₂ adsorbent 102b of the working electrode 102 can be realized at the same time. The counter-electrode active material 103b of the counter electrode 103 discharges electrons to be oxidized, and the electrons are supplied from the counter electrode 103 to the working electrode 102.

In the working electrode 102, the oxygen reduction reaction in which active oxygen O₂⁻ is generated from O₂ contained in the CO₂ containing gas and the carbonate ion generation reaction in which CO₂ contained in the CO₂ containing gas is oxidized by the active oxygen O₂⁻ to generate carbonate ions CO₃²⁻ proceed. The CO₂ contained in the CO₂ containing gas is adsorbed by the CO₂ adsorbent 102b. Thus, the CO₂ recovery device 100 can recover CO₂ from the CO₂ containing gas.

In the CO₂ recovery mode, when O₂ contained in the CO₂ containing gas receives electrons at the working electrode 102, active oxygen O₂⁻ is generated. In the present embodiment, the electrolyte 106 having the small dissolved oxygen concentration and the small oxygen diffusion coefficient is used. Therefore, while allowing the generation of active oxygen O₂⁻ that contributes to CO₂ adsorption at the working electrode 102, the diffusion of the active oxygen to the counter electrode 103 side can be suppressed.

After the CO₂ is recovered by the CO₂ recovery device 100, the CO₂ removed gas is discharged from the CO₂ recovery device 100. The passage switching valve 12 switches the passage of exhaust gas toward the atmosphere, and the CO₂ removed gas from the CO₂ recovery device 100 is discharged to the atmosphere.

Next, the CO₂ discharge mode will be described. In the CO₂ discharge mode, the compressor 11 is stopped and supply of the CO₂ containing gas to the CO₂ recovery device 100 is stopped. In the CO₂ recovery device 100, a voltage applied between the working electrode 102 and the counter electrode 103 is set to the second voltage V2. As a result, electron donation of the CO₂ adsorbent 102b of the working electrode 102 and electron attraction of the counter-electrode active material 103b of the counter electrode 103 can be realized at the same time. The counter-electrode active material 103b of the counter electrode 103 receives electrons to be reduced.

The CO₂ adsorbent 102b of the working electrode 102 discharges electrons. By discharging electrons, the CO₂ adsorbent 102b desorbs CO₂.

The CO₂ from the CO₂ adsorbent 102b is discharged from the CO₂ recovery device 100. The passage switching valve 12 switches the passage of the exhaust gas toward the CO₂ utilizing device 13, and the CO₂ discharged from the CO₂ recovery device 100 is supplied to the CO₂ utilizing device 13.

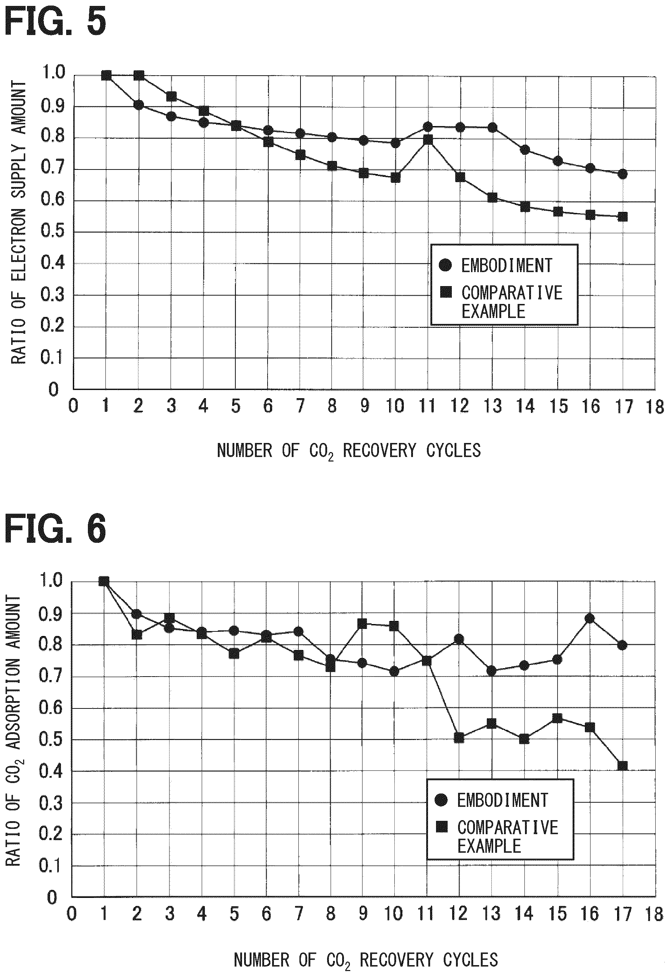

The following describes an electron supply amount and a CO₂ adsorption amount of the electrochemical cell 101 of the present embodiment. FIG. 5 shows the change in the amount of electrons supplied from the counter electrode 103 to the working electrode 102 when the CO₂ recovery mode is repeatedly performed in the electrochemical cell 101 of the present embodiment. FIG. 6 shows the change in the amount of CO₂ adsorbed by the working electrode 102 when the CO₂ recovery mode is repeatedly performed in the electrochemical cell 101 of the present embodiment.

FIG. 5 and FIG. 6 show the electron supply amount and the CO₂ adsorption amount of the electrochemical cell 101 using [TMPA][TFSI] as the electrolyte 106 of the present embodiment. FIG. 5 and FIG. 6 also show, as a comparative example, an electron supply amount and a CO₂ adsorption amount of an electrochemical cell using conventionally-used [BMIM][TFSI] as an electrolyte.

In FIG. 5 and FIG. 6, the horizontal axis indicates the number of cycles the electrochemical cell 101 performs the CO₂ recovery mode. The vertical axis in FIG. 5 represents a ratio of the electron supply amount, which is a ratio of change in the electron supply amount when the electron supply amount in the first cycle of the CO₂ recovery mode is set to 1.0 (100%). The vertical axis in FIG. 6 represents a ratio of the CO₂ adsorption amount, which is a ratio of change in the CO₂ adsorption amount when the CO₂ adsorption amount in the first cycle of the CO₂ recovery mode is set to 1.0 (100%).

As shown in FIG. 5, when the CO₂ recovery mode is repeated, the electron supply amount decreases in both the present embodiment and the comparative example. When the number of CO₂ recovery cycles exceeds five, a decrease rate in the electron supply amount is smaller in the present embodiment than in the comparative example. In other words, it is understood that the electrochemical cell 101 of the present embodiment is can restrict the decrease in the electron supply amount more effectively than the comparative example.

As shown in FIG. 6, when the CO₂ recovery mode is repeated, the CO₂ adsorption amount decreases in both the present embodiment and the comparative example. When the number of CO₂ recovery cycles exceeds eleven, a decrease rate in the CO₂ adsorption amount is smaller in the present embodiment than in the comparative example. In other words, it is understood that the electrochemical cell 101 of the present embodiment can restrict the decrease in the CO₂ adsorption amount more effectively than the comparative example.

The CO₂ recovery device 100 of the present embodiment described above uses the electrolyte 106 that has the small dissolved oxygen concentration and the small oxygen diffusion coefficient. Therefore, when the CO₂ adsorbent 102b having no active sites is used, it is possible to restrict the active oxygen generated at the working electrode 102 from diffusing to the counter electrode 103 while allowing the generation of active oxygen that contributes to CO₂ adsorption. This makes it possible to restrict the counter electrode active material 103b from being oxidized and decomposed by active oxygen, to restrict the decrease in the amount of electrons supplied from the counter electrode 103 to the working electrode 102, and to restrict the decrease in the amount of CO₂ adsorbed by the working electrode 102.

In the present embodiment, at least one of [TMPA][TFSI] and [P14][TFSI] is used as the electrolyte 106. These ionic liquids are substances with the small dissolved oxygen concentration and the small oxygen diffusion coefficient, and can effectively restrict active oxygen generated at the working electrode 102 from diffusing to the counter electrode 103.

### (Second Embodiment)

The following describes a second embodiment of the present disclosure. Hereinafter, only portions different from the first embodiment are described.

In the second embodiment, an antioxidant is added to the counter-electrode active material 103b to prevent oxidation of the counter-electrode active material 103b. The antioxidant is a substance that reacts preferentially with active oxygen rather than with the counter-electrode active material 103b. In the present embodiment, a phenol having a hydroxy group on the aromatic substituent is used as the antioxidant.

As such a phenol-based antioxidant, Irganox 1010 manufactured by BASF Japan Ltd., can be used. Irganox 1010 is pentaerythritol tetrakis[3-(3',5'-di-t-butyl-4'-hydroxyphenyl)propionic acid] with the molecular formula C₇₃H₁₀₈O₁₂ and has the following structural formula:

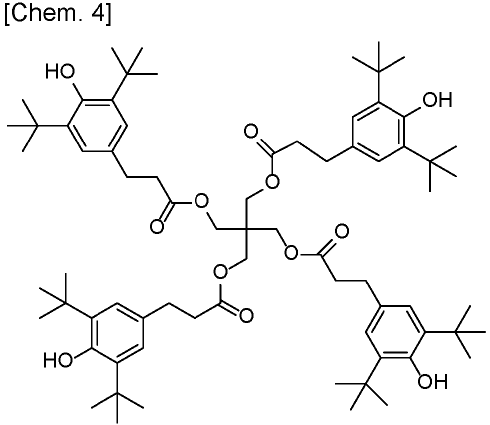

In the second embodiment, the counter-electrode active material 103b and the antioxidant are mixed in a mass ratio of 1:1. That is, the mixture of counter-electrode active material 103b and the antioxidant contains 50 wt % of the antioxidant.

According to the second embodiment, by adding the antioxidant to the counter-electrode active material 103b, even if active oxygen generated in the working electrode 102 diffuses to the counter electrode 103, the antioxidant reacts preferentially with the active oxygen. Thus, the reaction between active oxygen and the counter-electrode active material 103b can be restricted, the oxidative decomposition of the counter-electrode active material 103b can be restricted, the decrease in the amount of electrons supplied from the counter electrode 103 to the working electrode 102 can be restricted, and the decrease in the amount of CO₂ adsorption by the working electrode 102 can be restricted.

Moreover, the configuration of the second embodiment in which the antioxidant is added to the counter-electrode active material 103b is not limited to a configuration using the electrolyte 106 having the small dissolved oxygen concentration and the small oxygen diffusion coefficient, but can also be applied to a configuration using a conventional electrolyte.

### (Third Embodiment)

The following describes a third embodiment of the present disclosure. Hereinafter, only portions different from the above-described embodiments are described.

In the third embodiment, a pore size of the insulating layer 104 made of the porous body is set to a size that ensures ion permeability while preventing the permeation of decomposition products of the counter-electrode active material 103b. That is, the pore size of the insulating layer 104 is smaller than the size of the decomposition products generated by the oxidative decomposition of the counter-electrode active material 103b by active oxygen. Specifically, the pore size of the insulating layer 104 is set to 1 µm or less.

According to the third embodiment, when active oxygen generated at the working electrode 102 reaches the counter electrode 103 and the decomposition products of the counter-electrode active material 103b are generated by the active oxygen, the decomposition products do not permeate the insulating layer 104. This makes it possible to prevent the decomposition products of the counter-electrode active material 103b from permeating through the insulating layer 104 and diffusing from the counter electrode 103 to the working electrode 102, and allows the decomposition products of the counter-electrode active material 103b to be present only in a portion of the electrolyte 106 separated by the insulating layer 104 and adjacent to the counter electrode 103. As a result, the portion of the electrolyte 106 separated by the insulating layer 104 and adjacent to the counter electrode 103 can be saturated with the decomposition products, further decomposition of the counter-electrode active material 103b can be restricted, and the decrease in the amount of CO₂ adsorbed by the working electrode 102 can be restricted.

### (Fourth Embodiment)

Next, a fourth embodiment of the present disclosure will be described. Hereinafter, only portions different from the above-described embodiments will be described.

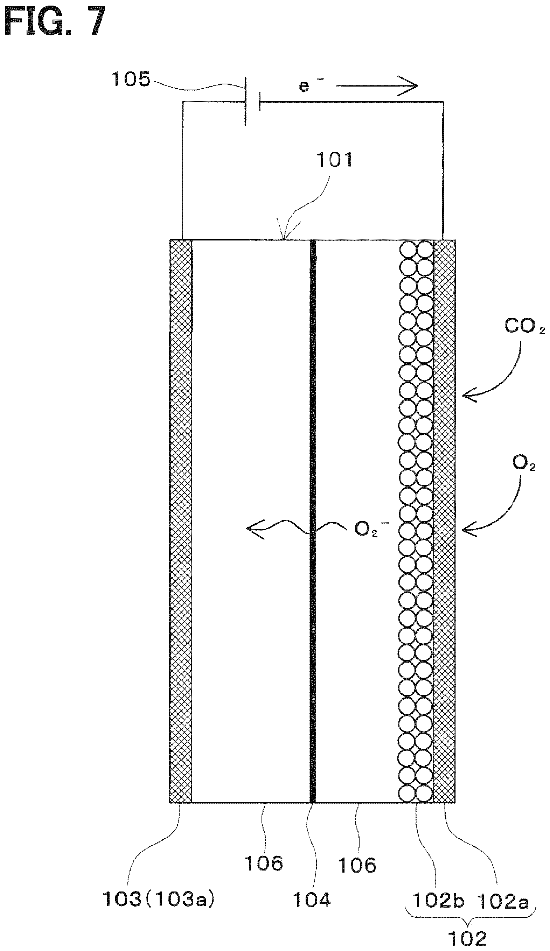

As shown in FIG. 7, in the fourth embodiment, the counter electrode 103 does not include the counter-electrode active material 103b. The counter-electrode active material 103b is an electroactive species that receives and releases electrons by a redox reaction. In the fourth embodiment, the counter-electrode current collector 103a constituting the counter electrode 103 is made of a carbonaceous material or a porous metal. The counter-electrode active material 103b corresponds to an active material of the present disclosure.

In the electrochemical cell 101, when a voltage is applied between the working electrode 102 and the counter electrode 103, electrons and ions contained in the electrolyte 106 form an electric double layer. In the CO₂ recovery mode, when cations of the electrolyte 106 move to a surface of the working electrode 102 and anions of the electrolyte 106 move to a surface of the counter electrode 103, a potential difference is formed between the vicinity of the respective surfaces, and electrons are supplied from the counter electrode 103 to the working electrode 102. In the CO₂ discharge mode, anions of the electrolyte 106 move to the surface of the working electrode 102, cations of the electrolyte 106 move to the surface of the counter electrode 103, and electrons are supplied from the working electrode 102 to the counter electrode 103.

In this fourth embodiment in which the counter-electrode active material 103b is not provided, the voltage applied between the working electrode 102 and the counter electrode 103 in the CO₂ adsorption mode is made larger than in each of the above embodiments in which the counter-electrode active material 103b is provided. In other words, in the CO₂ adsorption mode, the potential difference between the working electrode potential and the counter electrode potential is increased toward the negative side, so that the potential difference obtained by subtracting the potential of the counter electrode 103 from the potential of the working electrode 102 is equal to or less than a predetermined value (for example, -2.0 V or less).

According to the fourth embodiment, when the CO₂ adsorbent 102b having no active sites is used, the generation of active oxygen that contributes to CO₂ adsorption is allowed, and even if the active oxygen reaches the counter electrode 103, the counter-electrode active material is not oxidized and decomposed. Therefore, it is possible to restrict the decrease in the CO₂ adsorption amount due to oxidative decomposition of the counter-electrode active material.

Furthermore, when a carbonaceous material is used as the counter-electrode current collector 103a in the fourth embodiment, the carbonaceous material may be oxidized by the active oxygen, and the amount of electrons supplied from the counter electrode 103 to the working electrode 102 may decrease. Therefore, by using the electrolyte 106 with the small dissolved oxygen concentration and the small oxygen diffusion coefficient, the diffusion of the active oxygen from the working electrode 102 to the counter electrode 103 can be restricted, and the oxidation of the carbonaceous material constituting the counter-electrode current collector 103a can be restricted.

The present disclosure is not limited to the above-described embodiment, and various modifications can be made without departing from the spirit of the present disclosure. The means disclosed in each of the above embodiments may be appropriately combined to the extent practicable.

The carbon dioxide recovery system disclosed in the present specification has the following features.

### (First Feature)

A carbon dioxide recovery system is for separating CO₂ from a CO₂ containing gas that contains CO₂ through electrochemical reactions and includes an electrochemical cell (101) in which a working electrode (102) including a CO₂ adsorbent (102b) and a counter electrode (103) are disposed to sandwich an electrolyte (106). The CO₂ adsorbent is configured to absorb CO₂ in response to electrons being supplied from the counter electrode to the working electrode due to a voltage applied between the working electrode and the counter electrode. The electrolyte is made of a material that satisfies at least one of requirements that a dissolved oxygen concentration is 0.2 cm³/cm³ or less and an oxygen diffusion coefficient is 5×10⁻⁷ cm⁻²/s or less.

### (Second Feature)

In the carbon dioxide recovery system according to the first feature, the electrolyte has a dissolved carbon dioxide concentration of 1×10⁻³ cm³/cm³ or more.

### (Third Feature)

In the carbon dioxide recovery system according to the first feature or the second feature, the electrolyte has a carbon dioxide diffusion coefficient of 1×10⁻⁷ cm⁻²/s or more.

### (Fourth Feature)

In the carbon dioxide recovery system according to any one of the first to third features, the electrolyte is at least one of [TMPA][TFSI] and [P14][TFSI].

### (Fifth Feature)

In the carbon dioxide recovery system according to any one of the first to fourth features, the counter electrode includes a counter-electrode active material, and the counter-electrode active material is added with an antioxidant that reacts more preferentially with active oxygen than the counter-electrode active material.

### (Sixth Feature)

A carbon dioxide recovery system is for separating CO₂ from a CO₂ containing gas that contains CO₂ through electrochemical reactions, and includes an electrochemical cell (101) in which a working electrode (102) including a CO₂ adsorbent (102b) and a counter electrode (103) are disposed to sandwich an electrolyte (106). The CO₂ adsorbent is configured to absorb CO₂ in response to electrons being supplied from the counter electrode to the working electrode due to a voltage applied between the working electrode and the counter electrode. The counter electrode includes a counter-electrode active material. The counter-electrode active material is added with an antioxidant that reacts more preferentially with active oxygen than the counter-electrode active material.

### (Seventh Feature)

In the carbon dioxide recovery system according to the fifth feature or the sixth feature, the antioxidant is a phenol.

### (Eighth Feature)

In the carbon dioxide recovery system according to the seventh feature, the antioxidant is pentaerythritol tetrakis[3-(3',5'-di-t-butyl-4'-hydroxyphenyl)propionic acid].

### (Ninth Feature)

The carbon dioxide recovery system according to any one of the fifth to eighth features further includes an insulating layer (104) disposed between the working electrode and the counter electrode to electrically insulate the working electrode from the counter electrode. The insulating layer is a made of a porous body, and a pore size of the porous body is smaller than a size of a decomposition product generated by oxidative decomposition of the counter-electrode active material by the active oxygen.

### (Tenth Feature)

In the carbon dioxide recovery system according to any one of the first to fourth features, the counter electrode includes no active material, and the CO₂ adsorbent is configured to adsorb CO₂ in response to the electrons being supplied from the counter electrode to the working electrode due to the voltage applied between the working electrode and the counter electrode so that a potential difference obtained by subtracting a potential of the counter electrode from a potential of the working electrode is equal to or less than a predetermined value.

### (Eleventh Feature)

A carbon dioxide recovery system is for separating CO₂ from a CO₂ containing gas that contains CO₂ through electrochemical reactions, and includes an electrochemical cell (101) in which a working electrode (102) including a CO₂ adsorbent (102b) and a counter electrode (103) are disposed to sandwich and an electrolyte (106). The counter electrode includes no active material, and the CO₂ adsorbent is configured to adsorb CO₂ in response to electrons being supplied from the counter electrode to the working electrode due to a voltage applied between the working electrode and the counter electrode so that a potential difference obtained by subtracting a potential of the counter electrode from a potential of the working electrode is equal to or less than a predetermined value.

While the present disclosure has been described with reference to embodiments thereof, it is to be understood that the disclosure is not limited to the embodiments and constructions. To the contrary, the present disclosure is intended to cover various modification and equivalent arrangements. In addition, while the various elements are shown in various combinations and configurations, which are exemplary, other combinations and configurations, including more, less or only a single element, are also within the spirit and scope of the present disclosure.

## Claims

1. A carbon dioxide recovery system for separating CO₂ from a CO₂ containing gas that contains CO₂ through electrochemical reactions, the carbon dioxide recovery system comprising
an electrochemical cell (101) in which a working electrode (102) including a CO₂ adsorbent (102b) and a counter electrode (103) are disposed to sandwich an electrolyte (106), wherein
the CO₂ adsorbent is configured to absorb CO₂ in response to electrons being supplied from the counter electrode to the working electrode due to a voltage applied between the working electrode and the counter electrode, and
the electrolyte is made of a material that satisfies at least one of requirements that a dissolved oxygen concentration is 0.2 cm³/cm³ or less and an oxygen diffusion coefficient is 5×10⁻⁷ cm⁻²/s or less.

2. The carbon dioxide recovery system according to claim 1, wherein
the electrolyte has a dissolved carbon dioxide concentration of 1×10⁻³ cm³/cm³ or more.

3. The carbon dioxide recovery system according to claim 1, wherein
the electrolyte has a carbon dioxide diffusion coefficient of 1×10⁻⁷ cm⁻²/s or more.

4. The carbon dioxide recovery system according to claim 1, wherein
the electrolyte is at least one of [TMPA][TFSI] and [P14][TFSI].

5. The carbon dioxide recovery system according to any one of claims 1 to 4, wherein
the counter electrode includes no active material, and
the CO₂ adsorbent is configured to adsorb CO₂ in response to the electrons being supplied from the counter electrode to the working electrode due to the voltage applied between the working electrode and the counter electrode so that a potential difference obtained by subtracting a potential of the counter electrode from a potential of the working electrode is equal to or less than a predetermined value.

6. The carbon dioxide recovery system according to claim 1, wherein
the counter electrode includes a counter-electrode active material (103b), and
the counter-electrode active material is added with an antioxidant that reacts more preferentially with active oxygen than the counter-electrode active material.

7. A carbon dioxide recovery system for separating CO₂ from a CO₂ containing gas that contains CO₂ through electrochemical reactions, the carbon dioxide recovery system comprising
an electrochemical cell (101) in which a working electrode (102) including a CO₂ adsorbent (102b) and a counter electrode (103) are disposed to sandwich an electrolyte (106), wherein
the CO₂ adsorbent is configured to absorb CO₂ in response to electrons being supplied from the counter electrode to the working electrode due to a voltage applied between the working electrode and the counter electrode, and
the counter electrode includes a counter-electrode active material (103b), and the counter-electrode active material is added with an antioxidant that reacts more preferentially with active oxygen than the counter-electrode active material.

8. The carbon dioxide recovery system according to claim 6 or 7, wherein the antioxidant is a phenol.

9. The carbon dioxide recovery system according to claim 8, wherein the antioxidant is pentaerythritol tetrakis[3-(3',5'-di-t-butyl-4'-hydroxyphenyl)propionic acid].

10. The carbon dioxide recovery system according to claim 6 or 7, further comprising
an insulating layer (104) disposed between the working electrode and the counter electrode to electrically insulate the working electrode from the counter electrode, wherein
the insulating layer is a made of a porous body, and a pore size of the porous body is smaller than a size of a decomposition product generated by oxidative decomposition of the counter-electrode active material by the active oxygen.

11. A carbon dioxide recovery system for separating CO₂ from a CO₂ containing gas that contains CO₂ through electrochemical reactions, the carbon dioxide recovery system comprising
an electrochemical cell (101) in which a working electrode (102) including a CO₂ adsorbent (102b) and a counter electrode (103) are disposed to sandwich an electrolyte (106), wherein
the CO₂ adsorbent is configured to absorb CO₂ in response to electrons being supplied from the counter electrode to the working electrode due to a voltage applied between the working electrode and the counter electrode,
the counter electrode includes no active material, and
the CO₂ adsorbent is configured to adsorb CO₂ in response to the electrons being supplied from the counter electrode to the working electrode due to the voltage applied between the working electrode and the counter electrode so that a potential difference obtained by subtracting a potential of the counter electrode from a potential of the working electrode is equal to or less than a predetermined value.
